# EUROPEAN PATENT APPLICATION

(11) **EP 2 698 960 A2**
(43) Date of publication of application: **19.02.2014**
(21) Application number: 13003932.4
(22) Date of filing: 06.08.2013
(51) Int. Cl.: H04L 27/28

(54) **Method and telecommunications device for analyzing multiple carriers in radio frequency signal**

(30) Priority: 06.08.2012 US 201261680095 P; 25.06.2013 US 201313927098
(71) Applicant: MediaTek Inc., Hsin-Chu (TW)
(72) Inventor: Kuo, Chun-Ming, Hsinchu City (TW); Shen, Shih-Chi, New Taipei City (TW)
(74) Representative: Hoefer & Partner

(57) **Abstract**

An embodiment of the invention provides a method of processing a radio frequency (RF) signal. According to the embodiment, the RF signal is first synthesized with a synthesis signal to generate a synthesized signal. Then, the synthesized signal is filtered with a filtering bandwidth to generate a filtered signal. Next, the filtered signal is converted into digital data. Then, the digital data is processed to analyze a plurality of carriers within the filtering bandwidth as presented in the RF signal.

## Description

### Cross Reference To Related Applications

This application claims the benefit of U.S. provisional application No. 61/680,095, filed on 08/06/2012 and incorporated herein by reference.

### Background

### 1. Technical Field

The invention relates generally to telecommunications, and more particularly, to analysis of multiple carriers used in telecommunications.

### 2. Related art

A first telecommunications device may be served by one of several second telecommunications devices near the first telecommunications device. For example, the first telecommunications device may be a mobile station (MS) or user equipment (UE); each of the second telecommunications devices may be a telecommunications base station (BS) or Node B. Each of the second telecommunications devices may use a specific carrier. A carrier may also be called a carrier signal or a carrier wave; it may have a specific frequency.

From the first telecommunications device's perspective, the second telecommunications device that's currently serving the first telecommunications device may be regarded a serving telecommunications device. Although the first telecommunications device may not be communicating with the other nearby second telecommunications devices, the first telecommunications device may need to monitor carriers used by these nearby second telecommunications devices. For example, this may help the first telecommunications device to determine whether to select another nearby second telecommunications device as its serving telecommunications device, and which one of the nearby second telecommunications devices should be selected.

Because there may be several carriers to be monitored, e.g. as many as 32 carriers, receiving these carriers one after another may take up a lot of time and waste a lot of power. The excessive power consumption may reduce the standby time of the first telecommunications device, forcing its user to charge it more frequently. In addition, the long delay may make it inconvenient to use the first telecommunications device.

### Summary

An embodiment of the invention provides a method of processing a radio frequency (RF) signal. According to the embodiment, the RF signal is first synthesized with a synthesis signal to generate a synthesized signal. Then, the synthesized signal is filtered with a filtering bandwidth to generate a filtered signal. Next, the filtered signal is converted into digital data. Then, the digital data is processed to analyze a plurality of carriers within the filtering bandwidth as presented in the RF signal.

Another embodiment of the invention provides a telecommunications device. The telecommunications device includes a synthesizer, a RF front end (RF FE), a filter, an analog-to-digital convertor (ADC), and a digital circuit. The synthesizer is configured to provide a synthesis signal. The RF FE is coupled to the synthesizer, and is configured to synthesize an RF signal received from an antenna with the synthesis signal to generate a synthesized signal. The filter is coupled to the RF FE and is configured to filter the synthesized signal to generate a filtered signal. The filter has a filtering bandwidth. The ADC is coupled to the filter and is configured to convert the filtered signal into digital data. The digital circuit is coupled to the ADC and is configured to process the digital data to analyze a plurality of carriers within the filtering bandwidth as presented in the RF signal.

Other features of the invention will be apparent from the accompanying drawings and from the detailed description which follows.

### Brief Description of the Drawings

The invention is fully illustrated by the subsequent detailed description and the accompanying drawings.
FIG. 1 shows a simplified block diagram of a first telecommunications device according to an embodiment of the invention.
FIG. 2 shows a simplified flowchart of a method that the first telecommunications device of FIG. 1 performs to monitor a plurality of carriers.
FIG. 3 shows a simplified block diagram of the digital circuit of FIG. 1 according to an embodiment of the invention.
FIG. 4 shows a simplified flowchart of a method that the digital circuit of FIG. 3 performs at a step depicted in FIG. 2.
FIG. 5 shows a simplified block diagram of the digital circuit of FIG. 1 according to another embodiment of the invention.

### Detailed Description

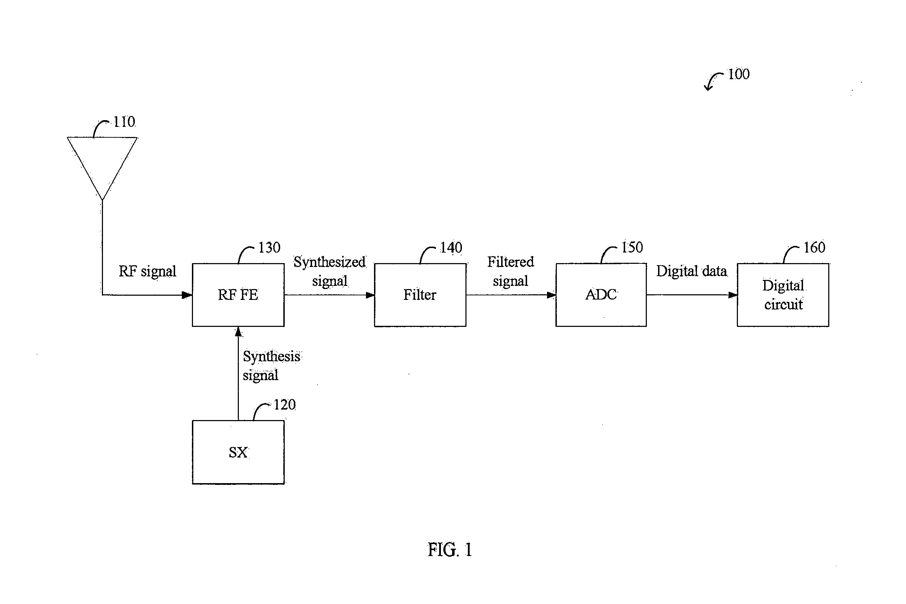

FIG. 1 shows a simplified block diagram of a first telecommunications device 100 according to an embodiment of the invention. This figure depicts only the components that help understand the concepts of the embodiment. These components include an antenna 110, a synthesizer (SX) 120, a radio frequency front end (RF FE) 130, a filter 140, an analog-to-digital convertor (ADC) 150, and a digital circuit 160. Other components are omitted from the figure for the sake of simplicity.

The antenna 110 is configured to receive an RF signal and pass the RF signal to the RF FE 130. The RF signal may contain information conveyed at several different frequencies. Some of these frequencies may be carriers used by some second telecommunications devices near the first telecommunications device 100. For example, these carriers may be broadcast control channel (BCCH) carriers, and the first telecommunications device 100 may need to monitor these carriers from time to time. The SX 120 is configured to generate a synthesis signal for the purpose of frequency down conversion. To accomplish this, the SX 120 may need to include a local oscillator (LO).

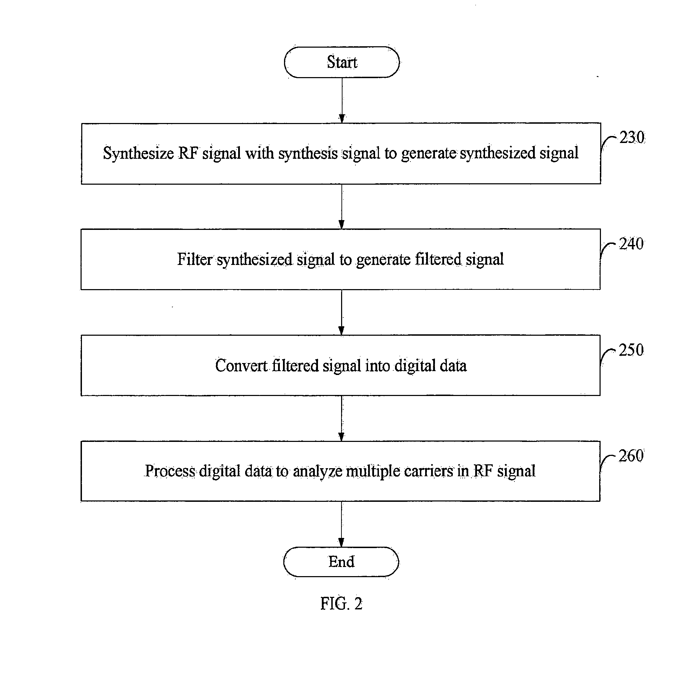

FIG. 2 shows a simplified flowchart of a method that the first telecommunications device 100 of FIG. 1 performs to monitor a plurality of carriers in the RF signal. These carriers may be used by a plurality of second telecommunications devices near the first telecommunications device 100, respectively.

After looking into several major telecommunications systems around the world, it has been found that many carriers to be monitored are likely close to each other in the frequency domain. As a result, the first telecommunications device 100 may take advantage of this characteristic to monitor these carriers together at once. For example, the first telecommunications device 100 may use the method of FIG. 2 to monitor carriers at frequencies f_1, f_2, ..., and f_n, respectively, where n is an integer greater than one and represents the amount of the carriers to be monitored together. As an example, n may be greater than five. Each of the monitored carriers may be greater than 20 kHz away from the synthesis frequency f_sx and less than 2 MHz away from the synthesis frequency f_sx. Among the monitored carriers, at least one may be at least 200 kHz away from the synthesis frequency f_sx.

Please refer to both FIG. 1 and FIG. 2. Firs, at step 230, the RF FE 130 synthesizes the RF signal with the synthesis signal to generate a synthesized signal. As a result of this step, the frequency of each of the carriers may be reduced by f_sx. In other words, in the synthesized signal, the carriers' frequencies may become f_1 - f_sx, f_2 - f_sx, ..., and f_n - f_sx, respectively. To carry out this step, the RF FE 130 may include a filter, a mixer, and an amplifier.

Then, at step 240, the filter 140 filters the synthesized signal to generate a filtered signal. In order to retain the information at frequencies near the synthesis frequency f_sx, the filter 140 may be a wideband filter (such as a low-pass filter or a band-pass filter) with a relatively larger filtering bandwidth. For example, an upper cut-off frequency f_co of the filter 140 may be at least 500 kHz. As another example, the upper cut-off frequency f_co of the filter 140 may be at least 1 MHz. The filter 140 may help retain those carriers within the filtering bandwidth and exclude other frequency components outside the filtering bandwidth.

Generally speaking, a filter may have a resistor-capacitor (RC) circuit, and its upper cut-off frequency is inversely proportional to the product of the RC circuit's resistance and capacitance. As a result, the greater the upper cut-off frequency, the smaller the filter will be on an integrated circuit (IC). Because the filter 140 of this embodiment has a relatively larger upper cut-off frequency f co, it may occupy a smaller area on an IC.

At step 250, the ADC 150 converts the filtered signal into digital data. To retain information contained within a relatively wider frequency range, i.e. within the filtering bandwidth of the filter 140, the ADC 150 may need to be a wideband high-speed ADC. For example, its sampling frequency f_sp may be at least 50 MHz. As another example, the sampling frequency f_sp of the ADC 150 may be at least 100 MHz. To reach such a high sampling frequency, the ADC 150 may include a sigma-delta ADC and one or several decimation filters.

At step 260, the digital circuit 160 processes the digital data to analyze the carriers in the RF signal. Specifically, for each of the carriers within the filtering bandwidth to be analyzed, the digital circuit 160 first performs digital frequency down conversion on the digital data to generate frequency down-converted data. Then, the digital circuit 160 processes the frequency down-converted data to analyze the given carrier. Through this step, the digital circuit 160 may determine whether this carrier is included within the filtering bandwidth, determine a power level of this carrier, or search a nearby second telecommunications device, or retrieve information conveyed through this carrier as presented in the RF signal.

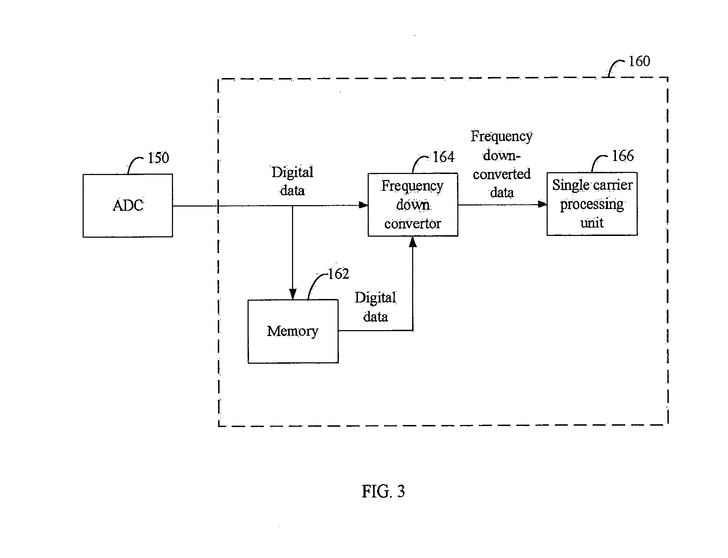

FIG. 3 shows a simplified block diagram of the digital circuit 160 of FIG. 1 according to an embodiment of the invention. The digital circuit 160 of this embodiment is able to analyze the carriers one after another. In this embodiment, the digital circuit 160 includes a memory 162, a frequency down convertor 164, and a single carrier processing unit 166. The memory 162 needs not to be one dedicated for analysis of the carriers, but may be included for other applications. When the first telecommunications device 100 needs to analyze several carriers, the memory 162 may be borrowed from the other applications for this purpose. At this moment the first telecommunications device 100 may be in the standby mode, and hence the memory 162 may not be in use and may be free to borrow. As a result, borrowing the memory 162 for the purpose of analyzing carriers is a feasible approach and may help save some hardware costs. As an example, the memory 162 may be an on-chip one, such as an on-chip static random access memory (SRAM).

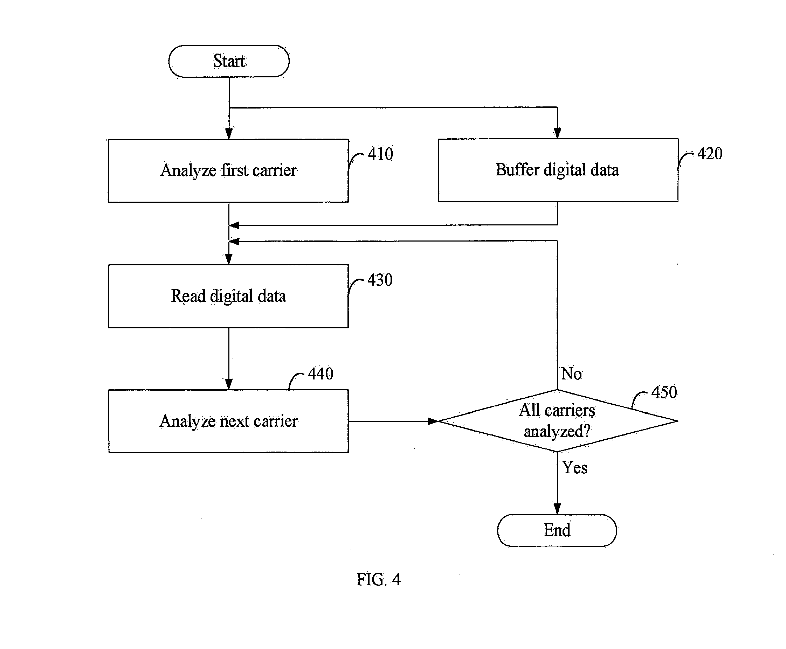

FIG. 4 shows a simplified flowchart of a method that the digital circuit 160 of FIG. 3 performs at step 260 depicted in FIG. 2. After the ADC 150 generates the digital data, the digital circuit 160 first analyzes a first carrier at step 410. Specifically, the frequency down convertor 164 performs digital frequency down conversion on the digital data to generate frequency down-converted data. For example, at this time the frequency shift may be equal to or close to the difference between f_sx and the frequency of the first carrier. The single carrier processing unit 166 then processes the frequency down-converted data to analyze the first carrier as presented in the RF signal. Simultaneous to step 410, the digital data is buffered into the memory 162 at step 420 for subsequent processing of the rest of the carriers.

At step 430, the buffered digital data is read from the memory 162. Then, at step 440, the digital circuit 160 analyzes a next carrier. Specifically, the frequency down convertor 164 performs digital frequency down conversion on the digital data to generate frequency down-converted data. This time the frequency shift may be equal to or close to the difference between f_sx and the frequency of the given carrier. The single carrier processing unit 166 then processes the frequency down-converted data to analyze the given carrier as presented in the RF signal. Please note that different carriers may correspond to different frequency down-converted data, respectively.

At step 450, the digital circuit 160 determines whether all the carriers have been analyzed. If the answer if no, it goes back to step 430; if the answer is yes, it moves to the end of the flowchart.

While the digital circuit 160 is performing steps 430, 440, and 450, the other components depicted in FIG. 1 may be turned off to save power. Because steps 430, 440, and 450 are performed in the digital domain, only a short period of time and only a little power will be needed to complete these steps.

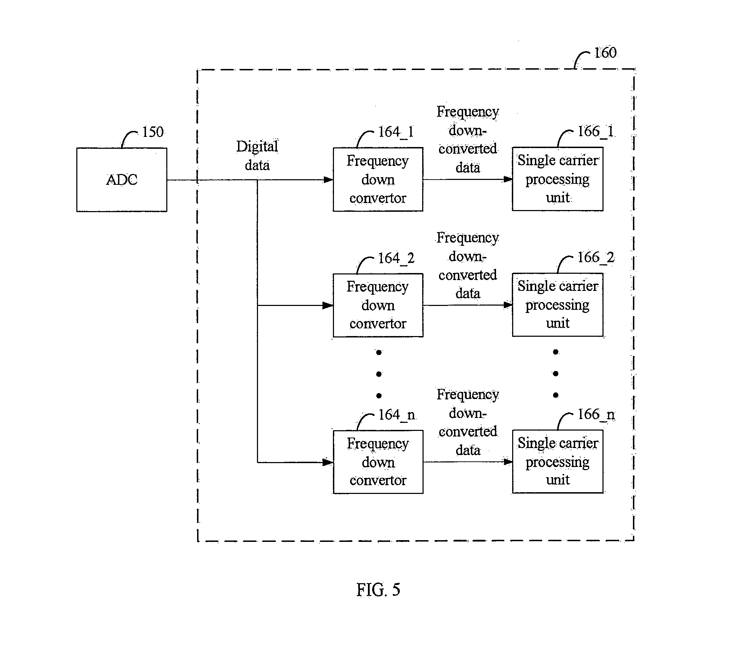

FIG. 5 shows a simplified block diagram of the digital circuit 160 of FIG. 1 according to another embodiment of the invention. The digital circuit 160 of this embodiment is able to analyze the carriers together, all at once. In this embodiment, the digital circuit 160 includes n frequency down convertors 164_1∼164_n and n single carrier processing units 166_1∼166_n. However, the digital circuit 160 of this embodiment may not include a memory. The frequency down convertors 164_i and the single carrier processing unit 166_i are responsible for analyzing the carrier f_i, where i is an integer between 1 and n. Specifically, the frequency down convertor 164_i performs digital frequency down conversion on the digital data to generate frequency down-converted data, with a frequency shift equal to or close to the difference between f_i and f_sx. This frequency down-converted data may be different from the other frequency down-converted data generated for the other carriers. The single carrier processing unit 166_i then processes the frequency down-converted data to analyze the carrier f_i as presented in the RF signal. Because the n carriers are analyzed simultaneously, it takes lesser time for the digital circuit 160 to finish analyzing all the n carriers.

Conventionally, a first telecommunications device may have to use its SX to generate a plurality of carriers successively, and to use its RF FE to synthesize an RF signal with the carriers successively. In other words, the first telecommunications device may have to have several successive RF receiving windows, each for one of the carriers. Each of the RF receiving windows would consume some power and take some time.

In contrast, the first telecommunications device 100 needs only one RF receiving window to generate the digital data that retains information of multiple (e.g. more than five) carriers. Once the digital circuit 160 receives the digital data, the other components depicted in FIG. 1 may be turned off. The digital circuit 160 may use the digital data to analyze the carriers digitally. Because only one RF receiving window is needed to enable analysis of several carriers, and digital processing is relatively faster and consumes less power, the embodiments may greatly reduce the power consumption of the first telecommunications device 100 and increase its standby time. For example, when one RF receiving window is used to enable analysis of n carriers, the first telecommunications device 100 may be able to reduce its RF power consumption by up to n times. Because of this, the first telecommunications device 100 may have an ultra-long standby time, e.g. several weeks long or even up to a month. The first telecommunications device 100 may also have a relatively longer talking time.

The embodiments also make it faster and more energy-economic for the first telecommunications device 100 to perform cell search when it needs to know which one of several nearby second telecommunications devices should be selected as its serving telecommunications device.

In addition to enabling analysis of several carriers, the single RF receiving window may even be used to receive signal from a second telecommunications device currently serving the first telecommunications device 100. This may reduce the power consumption of the first telecommunications device 100 even more.

The aforementioned embodiments may also be used to search for amplitude modulated (AM) or frequency modulated (FM) radio stations because each AM/FM radio station may use a specific carrier.

In the foregoing detailed description, the invention has been described with reference to specific exemplary embodiments thereof. It will be evident that various modifications may be made thereto without departing from the spirit and scope of the invention as set forth in the following claims. The detailed description and drawings are, accordingly, to be regarded in an illustrative sense rather than a restrictive sense.

## Claims

1. A method of processing a radio frequency (RF) signal, **characterized by**:
synthesizing the RF signal with a synthesis signal to generate a synthesized signal;
filtering the synthesized signal with a filtering bandwidth to generate a filtered signal;
converting the filtered signal into digital data; and
processing the digital data to analyze a plurality of carriers within the filtering bandwidth as presented in the RF signal.

2. The method of claim 1, **characterized in that** at least one of the carriers has a frequency at least 200 kHz away from a frequency of the synthesis signal.

3. The method of claim 1, **characterized in that** the step of filtering the synthesized signal comprises:
filtering the synthesized signal with an upper cutoff frequency of at least 500 kHz.

4. The method of claim 1, **characterized in that** the step of converting the filtered signal into the digital data comprises:
converting the filtered signal into the digital data with a sampling frequency of at least 50 MHz.

5. The method of claim 1, **characterized in that** the step of processing the digital data to analyze the plurality of carriers within the filtering bandwidth as presented in the RF signal comprises:
for each of the plurality of carriers within the filtering bandwidth, performing digital frequency down conversion on the digital data to generate frequency down-converted data and then processing the frequency down-converted data to analyze this carrier as presented in the RF signal.

6. The method of claim 1, **characterized in that** the step of processing the digital data to analyze the plurality of carriers within the filtering bandwidth as presented in the RF signal comprises:
processing the digital data to determine whether each of the plurality of the carriers is comprised within the filtering bandwidth.

7. The method of claim 1, **characterized in that** the step of processing the digital data to analyze the plurality of carriers within the filtering bandwidth as presented in the RF signal comprises:
processing the digital data to determine a power level or search a nearby second telecommunications device or to retrieve information of each of the plurality of carriers within the filtering bandwidth as presented in the RF signal.

8. A telecommunications device (100), **characterized by**:
a synthesizer (120), configured to provide a synthesis signal;
an RF front end (RF FE) (130), coupled to the synthesizer (120), configured to synthesize an RF signal received from an antenna (110) with the synthesis signal to generate a synthesized signal;
a filter (140), coupled to the RF FE (130), configured to filter the synthesized signal to generate a filtered signal, wherein the filter (140) has a filtering bandwidth;
an analog-to-digital convertor (ADC) (150), coupled to the filter (140), configured to convert the filtered signal into digital data; and
a digital circuit (160), coupled to the ADC (150), configured to process the digital data to analyze a plurality of carriers within the filtering bandwidth as presented in the RF signal.

9. The telecommunications device (100) of claim 8, **characterized in that** at least one of the carriers has a frequency at least 200 kHz away from a frequency of the synthesis signal.

10. The telecommunications device (100) of claim 8, **characterized in that** the filter (140) has an upper cutoff frequency of at least 500 kHz.

11. The telecommunications device (100) of claim 8, **characterized in that** the ADC (150) has a sampling frequency of at least 50 MHz.

12. The telecommunications device (100) of claim 8, **characterized in that** for each of the plurality of carriers within the filtering bandwidth, the digital circuit (160) is configured to:
perform digital frequency down conversion on the digital data to generate frequency down-converted data for the carrier; and
process the frequency down-converted data to analyze this carrier as presented in the RF signal.

13. The telecommunications device (100) of claim 8, **characterized in that** the digital circuit (160) is configured to process the digital data to determine whether each of the plurality of carriers is comprised within the filtering bandwidth.

14. The telecommunications device (100) of claim 8, **characterized in that** the digital circuit (160) is configured to process the digital data to determine a power level or search a nearby second telecommunications device or retrieve information of each of the plurality of carriers within the filtering bandwidth as presented in the RF signal.
